# EUROPEAN PATENT SPECIFICATION

(11) **EP 0 362 395 B1**
(45) Date of publication and mention of the grant of the patent: **27.10.1993**
(21) Application number: 89901754.5
(22) Date of filing: 30.01.1989
(51) Int. Cl.: B29C 45/76, B29C 45/56

(54) **METHOD AND APPARATUS FOR INJECTION COMPRESSION MOLDING**
VORRICHTUNG UND VERFAHREN ZUM EINSSPRITZ-VERDICHTUNGSFORMEN
PROCEDE ET DISPOSITIF DE MOULAGE PAR INJECTION-COMPRESSION

(30) Priority: 05.02.1988 JP 23957/88
(43) Date of publication of application: 11.04.1990
(73) Proprietor: FANUC LTD., Minamitsuru-gun, Yamanashi 401-05 (JP)
(72) Inventor: NEKO, Noriaki Fanuc Dai-3 Vira-karamatsu, Minamitsuru-gun Yamanashi 401-05 (JP); UMEMOTO, Hiroshi, Hino-shi Tokyo 191 (JP); KUBOTA, Kazuo, Fujiyoshida-shi Yamanashi 403 (JP)
(74) Representative: Billington, Lawrence Emlyn
(86) International application number: JP8900088
(87) International publication number: WO8907043

(56) References cited:
- WO-A-87/07867
- PATENT ABSTRACTS OF JAPAN, vol. 12, no. 332 (M-738)[3179], 8th September 1988;& JP-A-63 94 806 (TOSHIBA MACH. CO., LTD) 25-04-1988
- PATENT ABSTRACT OF JAPAN, vol. 9, no. 245 (M-418)[1968], 2nd October 1985;& JP-A-60 97 821 (FANUC K.K.) 31-05-1985
- PATENT ABSTRACTS OF JAPAN, vol. 7, no. 186 (E-193)[1331], 16th August 1983;
- & JP-A-58 89 085 (HITACHI SEISAKUSHO K.K.) 27-05-1983

## Description

The present invention relates to an injection compression molding method and an apparatus therefor, which are capable of accurately controlling a compression force applied to molten resin injected into a mold of an electrically-operated injection compression molding machine so as to uniformly fill the mold with the molten resin, thereby producing high-quality molded products with high reproducibility.

It is known to effect injection compression molding wherein a molten resin injected into a mold is compressed, so that the molten resin reaches fine parts of a cavity of the mold, to thereby attain improvement in dimensional accuracy and uniformity of density of molded products. Typically, injection compression molding is effected by driving a compression pin, provided in a clamping mechanism of a hydraulic injection molding machine, from a movable platen toward the mold by the use of a hydraulic mechanism, so that the compression pin applies a compression force on the molten resin filled in the mold. However, according to the prior art apparatus of the type driving the compression pin by means of the hydraulic mechanism, due to the presence of variations in properties of hydraulic oil for the hydraulic mechanism resulting from a change in temperature of the injection molding machine, it is difficult to control the driving force applied to the compression pin and the moving position of the compression pin, i.e., the compression force applied to the molten resin, with the required accuracy and reproducibility. This results in a variation of quality between the resultant molded products.

The object of the present invention is to provide an injection compression molding method and an apparatus therefor, which are capable of producing high-quality molded products with high reproducibility.

An electrically-operated injection molding machine, and its method of operation, are disclosed in WO-A-87/07867. However, there is no disclosure of any molten resin compression other than that provided by the injection screw. This above object is attained according to the invention by a method as defined in claim 1 and by a machine as defined in claim 5. Particular embodiments of the invention are disclosed in the dependent claims.

According to one aspect of the present invention, an injection compression molding method is provided, which is applied to an injection molding machine wherein servomotors associated with individual axes are drivingly controlled by means of a processing device for numerical control, and various operating sections are sequence-controlled by means of a programmable machine controller. The injection compression molding method comprises steps of: (a) determining whether or not a condition for starting an operation of compressing molten resin is fulfilled; (b) delivering a command for operation of compressing the molten resin, information specifying an axis associated with the molten resin compression, and information for control of the molten resin compression, from the programmable machine controller to the processing device for numerical control when said start condition is fulfilled; (c) executing pulse distribution associated with said specified axis in response to said command and on the basis of said control information by means of the processing device for numerical control; and (d) controlling an output torque of a servomotor associated with said specified axis during the execution of said step (c), so that a compression force actually applied to the molten resin attains to a preset value.

According to another aspect of the present invention, an electrically-operated injection compression molding machine comprises: a processing device for numerical control for drivingly controlling servomotors associated with individual axes; a programmable machine controller for sequence-controlling various operating sections of said molding machine; memory means arranged to be accessed from both of said processing device for numerical control and said programmable machine controller; pressure detecting means for detecting a compression force actually applied to molten resin; means for presetting an axis associated with molten resin compression, information for control of the molten resin compression, a compression force to be applied to the molten resin, and timing for starting an operation of compressing molten resin; and torque limiting means for restricting an output torque of one of said servomotors which corresponds to said axis associated with the molten resin compression. Said programmable machine controller includes means for delivering, to said memory means, a command for operation of compressing the molten resin, information specifying said preset axis for the molten resin compression, and information for control of the molten resin compression, upon arrival of said start timing of molten resin compression. Said processing device for numerical control is arranged to execute pulse distribution associated with said axis for the molten resin compression in response to said command for the compressing operation and on the basis of said information for control of the molten resin compression, and to control the output torque of a servomotor corresponding to said axis associated with the molten resin compression so that a compressing force actually applied to the molten resin attains to said preset compression force.

As mentioned above, according to the present invention, pulse distribution for the axis associated with the molten resin compression is executed by means of the processing device for numerical control, and the output torque of the servomotor associated with the axis for the molten resin compression is controlled so that the compression force actually applied to the molten resin attains to the preset value, on the basis of the information specifying the axis for the molten resin compression, the information for control of the molten resin compression, and the command for operation of the molten resin compression, which are respectively delivered from the programmable machine controller, upon fulfillment of the start condition of molten resin compression. Accordingly, the molten resin compressing operation can be carried out in an accurate manner, so as to produce high-quality molded products with no substantial variations therebetween.

### Brief Description of the Drawings

Fig. 1 is a flowchart of a control program for write processing of information for control of molten resin compression, and for preset processing of a torque limit value, in an injection compressing molding method according to an embodiment of the present invention;
Fig. 2 is a flowchart of a control program for concurrently executing pulse distribution processes associated with two axes in the injection compression molding method of the aforementioned embodiment; and

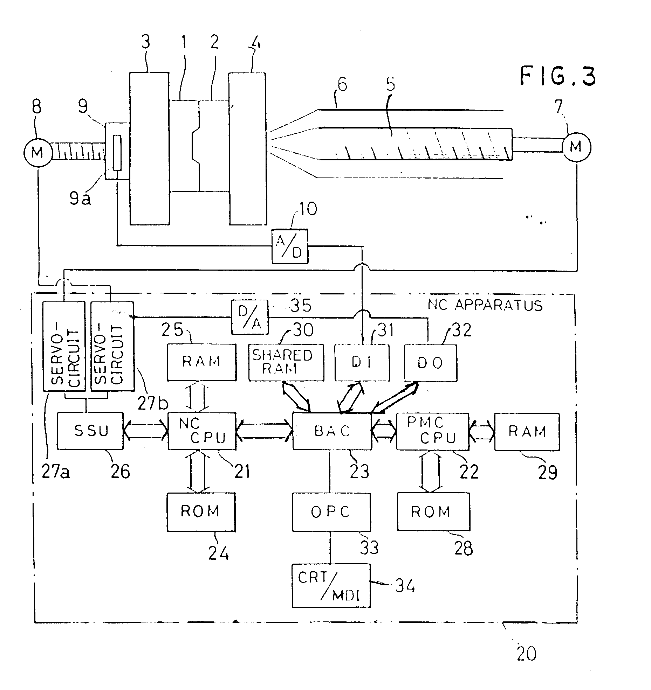

Fig. 3 is a schematic view, partly shown by a block diagram, of a portion of an electrically-operated injection compression molding machine to which is applied the injection compression molding method of the aforesaid embodiment.

An electrically-operated injection molding machine to which an injection compression molding method according to an embodiment of the present invention is applied, comprises various operating sections, respectively driven by servomotors, for injection, metering, mold-opening, mold-closing, mold-clamping, molded product-ejecting and the like. For example, the injection molding machine comprises: a mold clamping mechanism which includes stationary and movable platens 3 and 4 which are respectively mounted with mold halves 1 and 2, and a servomotor (not shown) for a mold clamping axis; an injection mechanism which includes a screw 5 fitted in a heating cylinder 6, axially driven forwards in an injection operation by an injection servomotor 7 through a rotary motion/linear motion converting mechanism (not shown), and rotatively driven by a servomotor for screw rotation; and an ejector (not shown).

Further, in order to apply a compression force on molten resin injected into a mold cavity (not shown) defined by the mold halves 1, 2 during execution of an injection process by means of the injection servomotor 7 or upon completion of the same process, a pin (not shown) for molten resin compression arranged to project into the mold cavity is supported for reciprocal motion by the movable platen 3, for instance. Also, the pin is coupled to a servomotor 8 for molten resin compression by being driven forwards through a rotary motion/linear motion converting mechanism 9, both the elements 8, 9 being provided on the movable platen 3. Furthermore, a pressure detector for detecting a compression force applied to the molten resin, e.g., a load cell 9a, is mounted on a linear motion member (not shown) of the converting mechanism 9, for instance. In the meantime, the provision of the servomotor 8 for compression is not inevitably required. For example, the servomotor for the ejector may be arranged to also serve as the servomotor for molten resin compression.

Reference numeral 20 denotes a numerical control unit (hereinafter referred to as NC unit) for controlling various operations of the injection molding machine. The NC unit 20 comprises a central processing unit (hereinafter referred to as CPU) 21 for numerical control, and a CPU 22 for a programmable machine controller (hereinafter referred to as PMC) 22. Connected through buses to the NCCPU 21 are a ROM 24 storing therein a control program for generally controlling the injection molding machine; a RAM 25 for temporal storage of data; and a servo-interface 26 to which are connected servo circuits (only servo circuits, associated with the servomotors 7, 8 for injection and compression, are shown by reference numerals 27a and 28a, respectively) for drivingly controlling the aforesaid servomotors for individual axes. Each of the servo circuits is connected to a position detector, e.g., a pulse coder (not shown) mounted on a corresponding one of the servomotors. Connected through buses to the PMCCPU 22 are a ROM 28 storing therein a sequence program for controlling sequence operations of the injection molding machine and the like; and a RAM 29 for temporal storage of data produced during arithmetic processing of the CPU 22.

Connected through buses to both the CPUs 21, 22 is a bus arbiter controller (hereinafter referred to as BAC) 23 to which a shared RAM 30, an input circuit 31 and an output circuit 32 are connected through buses, and to which a manual data input device 34 with a CRT display (hereinafter referred to as CRT/MDI) is connected through an operator panel controller 33. The shared RAM 30, comprised of a read/write enabled, non-volatile memory such as bubble memory and CMOS memory, is arranged to store, for instance, an NC program for controlling operation of the injection molding machine, various preset values, parameters and macro variables which determine injection molding conditions. The input circuit 31 is connected through an A/D converter 10 to the load cell 9a and various sensors (not shown) provided in the injection molding machine. The output circuit 32 is connected to various actuators (not shown) of the injection molding machine, and is also connected through a D/A converter 35 to the servo circuit 27b corresponding to the compression servomotor 8 far performing the later-mentioned torque control

In the following, operation of the injection molding machine constructed as mentioned above will be explained. At first, an operator presets, through the CRT/MDI 34, various injection molding conditions which include: information specifying an axis associated with molten resin compression (step feed axis); control information for execution of molten resin compression process (feed direction, target feed position (target feed amount), feed rate, and compression force (torque limit value for restricting a servomotor output torque during the molten resin compression)), these preset conditions being stored in the shared RAM 30.

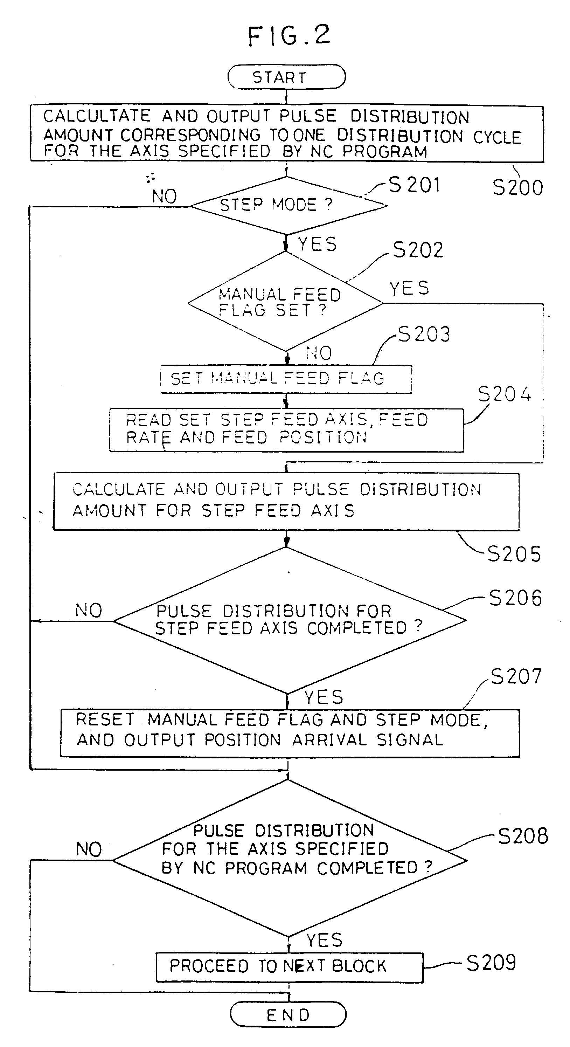

When the injection molding machine is operated after completion of presetting the injection molding conditions, the NC unit 20 controls the injection molding machine in accordance with the sequence program stored in the ROM 28 and the NC program stored in the shared RAM 30, so as to repetitively execute an injection molding operation, comprised of a series of processes which include mold-closing, mold-clamping, injection, compression, hold, cooling, metering, mold-opening, and molded product-ejecting, to thereby produce molded products. The NCCPU 21 executes the processing shown in Fig. 2 at predetermined intervals of cycle during the execution of each injection molding operation.

That is, upon receipt of a command from the PMCCPU 22, the NCCPU 21 reads one block of that part of the NC program, which corresponds to the command, from the shared RAM 30, and delivers, through the servo-interface 26, an amount of pulse distribution, corresponding to one pulse distribution cycle and calculated in accordance with control contents stated in the block concerned, to a servomotor associated with an axis specified by the program (step S200) Next, the NCCPU determines whether or not a molten resin compression mode (step mode) is selected (step S201) and, if the step mode is not selected, then the CPU further determines whether or not the pulse distribution for the aforesaid axis specified by the program has been completed (step S208). Whereupon, the NCCPU repetitively executes the loop consisting of the steps S200, S201 and S208 until the pulse distribution has been completed. Upon completion of the pulse distribution, the program advances to the step S209 so as to execute processing for the next block, which is the same as the aforesaid processing.

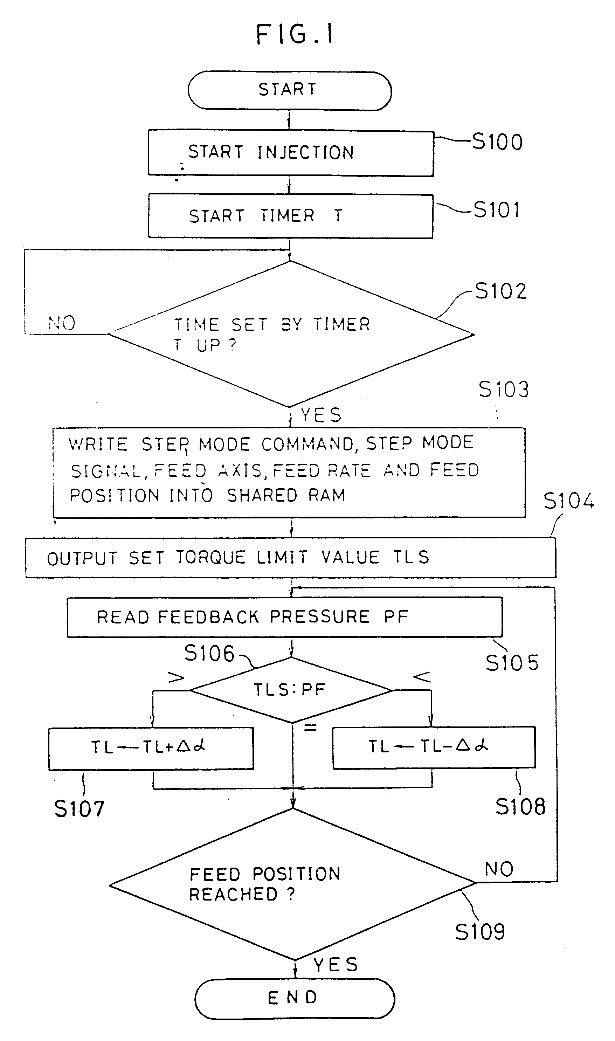

On the other hand, the PMCCPU 22 executes a control operation in accordance with the sequence program stored in the ROM 28. That is, as shown in Fig. 1, the PMCCPU 22 writes an injection start command into the shared RAM 30 through the BAC 23, and at the same time, starts a timer T for determining a start timing for molten resin compressing operation (steps S100 and S101). At this time, the NCCPU 21 executes pulse distribution to the servo circuit 27a associated with the injection servomotor 7 in the above manner in response to the injection start command. The timer time period is set to a time period corresponding to an injection time, e.g., a time period substantially equal to or less than the injection time.

When the time T is up at the time the injection process is completed or during the execution of the injection process (step S102), the PMCCPU 22 writes a command far molten resin compressing operation (step mode command), information specifying the aforesaid step feed axis, and control information for molten resin compressing process (step S103), into predetermined address regions of the shared RAM 30, respectively.

Upon the step mode command being written in the shared RAM 30, the NCCPU 21 determines that the step mode is selected at the step S201 of Fig. 2, and then determines whether or not a manual feed flag indicative of the step mode is set (step S202). If the manual feed flag is not set, the NCCPU sets the same flag (S203). That is, the manual feed flag is set during the program execution cycle immediately after the step mode command is written into the shared RAM 30. Next, the PMCCPU 22 reads the control information for molten resin compression process, which has been written in the predetermined address region of the shared RAM 30 by means of the same CPU, and calculates an amount of pulse distribution for the step feed axis, corresponding to one program execution cycle, and further causes the shared RAM 30 to store with the thus calculated value. On the basis of the calculated and stored value, the NCCPU 21 executes pulse distribution to a servo circuit for controlling the drive of the servomotor associated with the step feed axis, e.g., to the servo circuit 27b (step S205). As a result, the compression servomotor 8, for instance, rotates in the rotational direction corresponding to the feed direction at a rotational rate corresponding to the feed rate, accompanied with gradual projection of the compression pin (not shown), coupled to the linear motion member (not shown) of the converting mechanism 9, into the mold cavity, so as to start compression of the molten resin injected into the mold cavity.

The NCCPU 21 determines whether or not pulse distribution up to a target feed position for the step feed axis has been completed (step S206). If the pulse distribution has not been completed, the NCCPU further determines whether or not pulse distribution for an axis specified by the NC program, e.g., for the injection axis associated with hold and injection operations, has been completed (step S208). If the pulse distribution has not been completed as yet, the NCCPU repetitively executes a loop consisting of the steps S201, S202, S205, S206, and S208. That is, pulse distributions for both the axis specified by the NC program and the axis specified for molten resin compression (the step feed axis) are executed concurrently. As a consequence, for example, a molten resin compressing operation is carried out by the compression servomotor 8 as the injection operation is effected by the injection servomotor 7 or as the metering operation is effected by the screw rotation servomotor (not shown).

During the execution of the molten resin compressing operation, the PMCCPU 22 reads a torque limit value TLS (indicative of an upper limit value of the output torque of the servomotor associated with the step feed axis) for this compressing operation, which is preset in the shared RAM 30, and then delivers this preset torque limit value to the servo circuit associated with the servomotor which corresponds to the step feed axis, e.g., the servo circuit 27b associated with the compression servomotor 8, through the output circuit 32 and the D/A converter 35 (step S104 of Fig. 1). Next, the PMCCPU reads a feedback signal, Supplied from the pressure detector, e.g., the load cell 9a, through the input circuit 31 and the A/D converter 10 and indicative of a pressure PF actually applied to the molten resin (step S105), and further compares the same with the preset torque limit value TLS (step S106). A torque limit value TL delivered to the servo circuit 27b, for instance, is increased to a value which is larger than the preset value by Δα if the feedback pressure PF is less than the preset torque limit value TLS, whereas the value TL is decreased by Δα if the pressure is larger than the preset value (steps S107 and S108). If the feedback pressure PF and the value TLS are equal to each other, the program advances to the step S109 so as to make a determination as to whether or not the target step feed position has been reached, without alteration of the preset torque limit value. In this manner, by controlling the compression force in a feedback manner while the preset torque limit value is changed, where required, the actual compression force is controlled to the preset value while a control error, due to a change of the passage of time in the molten resin compressing system of the injection molding machine, is compensated for. In the meantime, a coincidence accuracy of the feedback value (actual value) PF with the preset value TLS changes in dependence on respective resolutions of the A/D converter 10 and the D/A converter 35.

When the pulse distribution up to the target feed position associated with the step feed axis is completed (step S206 of Fig. 2), the NCCPU 21 resets the manual feed flag so as to reset the step mode, and then writes a signal, indicative of arrival to the step feed position, in the shared RAM 30 (step S207). Upon the signal indicative of arrival to the step feed position being written in the shared RAM 30 (step S109 of Fig. 1), the PMCCPU 22 completes the compressing operation.

As mentioned above, the molten resin compressing operation is carried out accurately during the execution of the injection/hold operation or metering operation, whereby high-quality molded products can be manufactured with no substantial variations between these products.

## Claims

1. An injection compression molding method comprising the injection of molten resin into a mold cavity by the forwards axial movement of an injection screw (5) and comprising the compression of the molten resin in the mold cavity by the pressure applied by a compression means (8,9) other than the injection screw (5), the compression by said compression means (8,9) comprising the steps of:
(a) determining whether a condition for starting an operation of compressing molten resin by the compression means (8,9) is fulfilled or not;
(b) delivering a command for said operation of compressing the molten resin, information specifying an axis associated with said molten resin compression, and information for control in compressing the molten resin, from a programmable machine controller (22) for effecting sequence control of various operating sections of an injection molding machine to a processing device (21) or numerical control for drivingly controlling servomotors (7,8) associated with individual axes of said injection molding machine, when said start condition is fulfilled;
(c) executing pulse distribution associated with said specified axis in response to said command and on the basis of said control information by means of the processing device (21) for numerical control; and
(d) controlling an output torque of a servomotor (8) associated with said specified axis during the execution of said step (c), so that a compression force actually applied to the molten resin attains to a preset value.

2. An injection compression molding method according to claim 1, wherein the pulse distribution for said specified axis is executed concurrently with execution of pulse distribution for an axis other than said specified axis, in said step (c)

3. An injection compression molding method according to claim 1 or 2, wherein the fulfillment of said start condition for the molten resin compressing operation is determined in said step (a) when a predetermined time period, which is determined in dependence on an injection time, has been elapsed from an instant at which an injection operation of said injection molding machine is started.

4. An injection compression molding method according to any preceding claim, wherein said control information for molten resin compression includes a feed amount, feed rate and feed direction associated with said specified axis, and a torque limit value indicative of upper limit value of an output torque of a servomotor (8) associated with said specified axis.

5. An electrically-operated injection compression molding machine, comprising:
an injection screw (5);
compression means (8,9), other than the injection screw (5), for applying compression force to molten resin in a mold cavity;
a processing device (21) for numerical control for drivingly controlling servomotors (7,8) associated with individual axes;
a programmable machine controller (22) for sequence-controlling various operating sections of said molding machine;
memory means (30) arranged to be accessed from both of said processing device (21) for numerical control and said programmable machine controller (22); and
pressure detecting means (9a) for detecting a compression force actually applied to molten resin;
means for presetting an axis associated with the molten resin compression, information for control of the molten resin compression, and timing for starting an operation of compressing the molten resin; and
torque limiting means for restricting an output torque of one of said servomotors (8) corresponding to said axis associated with the molten resin compression;
said programmable machine controller (22) including means for delivering, to said memory means (30), a command for operation of compressing the molten resin, information specifying said preset axis for the molten resin compression, and information for control of the molten resin compression, upon arrival of said start timing of the molten resin compression;
said processing device (21) for numerical control being arranged to execute pulse distribution associated with said axis for the molten resin compression in response to said command for the compressing operation and on the basis of said information for control of the molten resin compression, and to control the output torque of a servomotor (8) corresponding to said axis associated with the molten resin compression so that a compressing force actually applied to the molten resin attains to said preset compression force.

6. An electrically-operated injection compression molding machine according to claim 5, wherein said processing device (21) for numerical control is operable to execute the pulse distribution for said specified axis concurrently with execution of pulse distribution for an axis other than said specified axis.

7. An electrically-operated injection compression molding machine according to claim 5 or 6, wherein said means for setting the molten resin compressing operation start timing is comprised of a timer.

8. An electrically-operated injection compression molding machine according to any of claims 5 to 7, wherein said control information means for the molten resin compression is operable to include a feed amount, feed rate and feed direction of said specified axis, and a torque limit value indicative of upper limit value of an output torque of a servomotor (8) associated with said specified axis.

## Patentansprüche

1. Verfahren Zum Einspritz-Verdichtungsformen, das ein Einspritzen eines geschmolzenen Kunstharzes in einen Gießformhohlraum durch die axiale Vorwärtsbewegung einer Einspritzschnecke (5) und das Verdichten des geschmolzenen Kunstharzes in dem Gießformhohlraum durch Druck umfaßt, der durch ein Verdichtungsmittel (8, 9), das nicht die Einspritzschnecke (5) ist, ausgeübt wird, wobei die Verdichtung durch das Verdichtungsmittel (8, 9) Schritte umfaßt zum:
(a) Entscheiden, ob eine Bedingung zum Starten eines Vorgangs zum Verdichten des geschmolzenen Kunstharzes durch das Verdichtungsmittel (8, 9) erfüllt oder nicht erfüllt ist,
(b) Liefern eines Befehls für den Vorgang des Verdichtens, von Information, die eine Achse angibt, welche dem Vorgang der Verdichtung des geschmolzenen Kunstharzes zugeordnet ist, und von Information zur Steuerung beim Verdichten des geschmolzenen Kunstharzes aus einer programmierbaren Maschinensteuereinrichtung (22) zum Bewirken einer Ablauffolgesteuerung von verschiedenen Arbeitsabschnitten einer Einspritzgießmaschine an eine Verarbeitungseinrichtung (21) zur numerischen Steuerung für die Antriebsregelung von Servomotoren (7, 8) mit individuellen Achsen der Einspritzgießmaschine, wenn die Bedingung zum Starten erfüllt ist,
(c) Ausführen einer Impulsverteilung, die der angegebenen Achse zugeordnet ist, in Reaktion auf den Befehl und auf der Grundlage der Information zur Steuerung mittels der Verarbeitungseinrichtung (21) zur numerischen Steuerung und
(d) Regeln eines Ausgangsdrehmoments eines Servomotors (8), der der angegebenen Achse zugeordnet ist, während der Ausführung des Schritts (c), so daß eine Verdichtungskraft, die tatsächlich auf das geschmolzene Kunstharz ausgeübt wird, einen voreingestellten Wert erreicht.

2. Verfahren zum Einspritz-Verdichtungsformen nach Anspruch 1, bei dem die Impulsverteilung für die angegebene Achse gleichzeitig mit der Ausführung einer Impulsverteilung für eine Achse, die nicht die angegebene ist, in dem Schritt (c) ausgeführt wird.

3. Verfahren zum Einspritz-Verdichtungsformen nach Anspruch 1 oder 2, bei dem über die Erfüllung der Bedingung für den Start für die Verdichtung des geschmolzenen Kunstharzes in dem Schritt (a) entschieden wird, wenn eine vorbestimmte Zeitperiode, die in Abhängigkeit von einer Einspritzzeit bestimmt ist, von dem Augenblick an abgelaufen ist, zu dem ein Einspritzvorgang der Einspritzgießmaschine gestartet ist.

4. Verfahren zum Einspritz-Verdichtungsformen nach einem der vorhergehenden Ansprüche, bei dem die Steuerungs-Information für die Verdichtung des geschmolzenen Kunstharzes Information über einen Vorschubbetrag, eine Vorschubrate und eine Vorschubrichtung, welche der angegebenen Achse zugeordnet ist, und einen Drehmomentgrenzwert enthält, der hinweisend auf einen oberen Grenzwert eines Ausgangsdrehmoments eines Servomotors (8) ist, der der angegebenen Achse zugeordnet ist.

5. Elektrisch betriebene Vorrichtung zum Einspritz-Verdichtungsformen, die umfaßt:
eine Einspritzschnecke (5),
ein Verdichtungsmittel (8, 9), das nicht die Einspritzschnecke (5) ist, zum Ausüben einer Druckkraft auf das geschmolzene Kunstharz in einem Gießformhohlraum,
eine Verarbeitungseinrichtung (21) zur numerischen Steuerung für die Triebregelung von Servomotoren (7, 8), die indivieduellen Achsen zugeordnet sind,
eine programmierbare Maschinen-Steuereinrichtung zur Ablauffolgen-Steuerung verschiedener Arbeitsabschnitte der Einspritzgießmaschine,
ein Speichermittel (30), auf das sowohl von der Verarbeitungseinrichtung (21) für die numerische Steuerung als auch von der programmierbaren Maschinensteuereinrichtung (22) zugegriffen wird,
ein Druckerfassungsmittel (9a) zum Erfassen eines Verdichtungsdrucks, der tatsächlich auf das geschmolzene Kunstharz ausgeübt wird,
ein Mittel zum Voreinstellen einer Achse, die dem Vorgang der Verdichtung des geschmolzenen Kunstharzes zugeordnet ist, zum Liefern von Information zur Steuerung des Vorgangs zum Verdichten des geschmolzenen Kunstharzes und zur Zeitsteuerung zum Starten eines Vorgangs zur Verdichtung des geschmolzenen Kunstharzes und
ein Drehmomentbegrenzungsmittel zum Begrenzen eines Ausgangsdrehmoments eines der Servomotoren (8), welcher der Achse entspricht, die dem Vorgang der Verdichtung des geschmolzenen Kunstharzes zugeordnet ist,
wobei die programmierbare Maschinensteuereinrichtung (22) ein Mittel enthält zum Liefern an das Speichermittel (30) eines Befehls zum Ausführen der Verdichtung des geschmolzenen Kunstharzes, von Information, welche die voreingestellte Achse für die Verdichtung des geschmolzenen Kunstharzes angibt, und von Information über die Steuerung der Verdichtung des geschmolzenen Kunstharzes auf das Eintreten des Startzeitpunkts für den Vorgang der Verdichtung des geschmolzenen Kunstharzes hin und
wobei die Verarbeitungseinrichtung (21) für die numerische Steuerung so beschaffen ist, daß sie die Impulsverteilung, welche der Achse für den Vorgang der Verdichtung des geschmolzenen Kunstharzes zugeordnet ist, in Reaktion auf den Befehl für den Vorgang der Verdichtung und auf der Grundlage der Information über die Steuerung der Verdichtung des geschmolzenen Kunstharzes ausführt und die Regelung des Ausgangsdrehuoments des einen Servomotors (8) durchführt, welcher der Achse entspricht, die der Verdichtung des geschmolzenen Kunstharzes zugeordnet ist, so daß eine Verdichtungskraft, die tatsächlich auf das geschmolzene Kunstharz ausgeübt wird, eine voreingestellte Verdichtungskraft erreicht.

6. Elektrisch betriebene Vorrichtung zum Einspritz-Verdichtungsformen nach Anspruch 5, bei der die Verarbeitungseinrichtung (21) zur numerischen Steuerung betreibbar ist, um die Impulsverteilung für die angegebene Achse gleichzeitig mit der Ausführung einer Impulsverteilung für eine Achse, die nicht die angegebene Achse ist, auszuführen.

7. Elektrisch betriebene Vorrichtung zum Einspritz-Verdichtungsformennach Anspruch 5 oder 6, bei der das Mittel zum Einstellen des Startzeitpunkts für den Vorgang der Verdichtung des geschmolzenen Kunstharzes aus einer Zeitschalteinrichtung besteht.

8. Elektrisch betriebene Vorrichtung zum Einspritz-Verdichtungsformen nach den Ansprüchen 5 bis 7, bei der das Mittel zum Liefern der Steuerinformation für den Vorgang der Verdichtung des geschmolzenen Kunstharzes derart betreibbar ist, daß die Information Angaben über den Vorschubbetrag, die Vorschubrate und die Vorschubrichtung der angegebenen Achse und einen Drehmomentgrenzwert enthält, der hinweisend auf einen oberen Grenzwert eines Ausgangsdrehmoments eines Servomotors (8) ist, welcher der angegebenen Achse zugeordnet ist.

## Revendications

1. Un procédé de moulage par injection-compression comprenant l'injection de résine fondue dans la cavité d'un moule par le mouvement axial vers l'avant d'une vis d'injection (5) et comprenant la compression de la résine fondue dans la cavité du moule par la pression appliquée par un moyen de compression (8, 9) autre que la vis d'injection (5), la compression par ledit moyen de compression (8, 9) comprenant les opérations consistant à :
(a) déterminer si est remplie ou non une condition de démarrage d'une opération de compression de la résine fondue par le moyen de compression (8, 9) ;
(b) fournir une instruction pour ladite opération de compression de la résine fondue, une information spécifiant un axe associé à ladite compression de résine fondue, et une information pour commander la compression de la résine fondue à partir d'un organe de commande de machine programmable (22) permettant d'effectuer une commande séquentielle de diverses sections de fonctionnement d'une machine de moulage par injection, vers un dispositif de traitement (21) pour commande numérique afin de commander en entraînement des servomoteurs (7, 8) associés à des axes individuels de ladite machine de moulage par injection, lorsque ladite condition de démarrage est remplie ;
(c) effectuer une répartition d'impulsions associée audit axe spécifié en réponse à ladite instruction et sur la base de ladite information de commande au moyen du dispositif de traitement (21) pour commande numérique ; et
(d) commander un couple de sortie d'un servomoteur (8) associé audit axe spécifié pendant l'exécution de ladite opération (c) de sorte qu'une force de compression réellement appliquée à la résine fondue atteint une valeur pré-établie.

2. Un procédé de moulage par injection-compression selon la revendication 1 dans lequel la répartition des impulsions pour ledit axe spécifié est effectuée en même temps que l'exécution de répartition d'impulsions pour un axe, autre que ledit axe spécifié dans ladite opération (c).

3. Un procédé de moulage par injection-compression selon la revendication 1 ou 2, dans lequel l'accomplissement de ladite condition de démarrage pour l'opération de compression de la résine fondue est déterminée dans ladite opération (a) lorsqu'une période de temps déterminée à l'avance, qui est déterminée en dépendance d'un temps d'injection, s'est écoulée à partir d'un instant auquel une opération d'injection de ladite machine de moulage par injection est démarrée.

4. Un procédé de moulage par injection-compression selon une revendication précédente quelconque, dans lequel ladite information de commande pour la compression de la résine fondue comprend une quantité d'amenée un taux d'amenée et une direction d'amenée associée audit axe spécifié, et une valeur de limite de couple indicatrice d'une valeur limite supérieure d'un couple de sortie d'un servomoteur (8) associé audit axe spécifié.

5. Une machine de moulage par injection-compression actionnée de manière électrique, comprenant :
une vis d'injection (5) ;
un moyen de compression (8, 9) autre que la vis d'injection (5), pour appliquer une force de compression à la résine fondue dans la cavité d'un moule ;
un dispositif de traitement (2) pour une commande numérique afin de commander l'entraînement des servomoteurs (7, 8) associés à des axes individuels ;
un organe de commande de machine programmable (22) pour la commande séquentielle de diverses sections de fonctionnement de ladite machine de moulage ;
des moyens à mémoire (30) prévus pour qu'on y accède à la fois depuis ledit dispositif de traitement (21) pour commande numérique et depuis ledit organe de commande de machine programmable (22) ; et
un moyen de détection de pression (9a) pour détecter une force de compression réellement appliquée à la résine fondue ;
un moyen pour pré-établir un axe associé à la compression de la résine fondue, une information pour commander la compression de la résine fondue, et une synchronisation pour démarrer une opération de compression de la résine fondue ; et
un moyen de limitation de couple pour limiter un couple de sortie d'un desdits servomoteurs (8) correspondant audit axe associé à la compression de la résine fondue ;
ledit organe de commande de machine programmable (22) comprenant des moyens pour fournir, audit moyen à mémoire (30), une instruction de fonctionnement de compression de la résine fondue, une information spécifiant ledit axe pré-établi pour la compression de la résine fondue, et une information pour la commande de la compression de la résine fondue, lors de l'arrivée de ladite synchronisation de démarrage de la compression de la résine fondue ;
ledit dispositif de traitement (21) pour commande numérique étant prévu pour effectuer une répartition d'impulsions associée audit axe pour la compression de la résine fondue en réponse à ladite instruction pour l'opération de compression et sur la base de ladite information pour la commande de compression de la résine fondue, et pour commander un couple de sortie d'un servomoteur (8) correspondant audit axe associé à la compression de la résine fondue de sorte qu'une force de compression réellement appliquée à la résine fondue atteigne ladite force de compression pré-établie.

6. Une machine de moulage par injection-compression actionnée de manière électrique selon la revendication 5, dans laquelle ledit dispositif de traitement (21) pour commande numérique est actionnable pour effectuer la répartition des impulsions pour ledit axe spécifié en même temps que l'exécution de la répartition des impulsions pour un axe autre que ledit axe spécifié.

7. Une machine de moulage par injection-compression actionnée de manière électrique selon la revendication 5 ou 6, dans laquelle ledit moyen permettant d'établir la synchronisation de démarrage de l'opération de compression de la résine fondue comprend une horloge.

8. Une machine de moulage par injection-compression actionnée de manière électrique selon une quelconque des revendications 5 à 7, dans laquelle ledit moyen permettant d'établir une information de commande pour la compression de la résine fondue est actionnable pour comprendre un quantité d'amenée, un taux d'amenée, et une direction d'amenée dudit axe spécifié, ainsi qu'une valeur limite de couple indicatrice de la valeur limite supérieure d'un couple de sortie d'un servomoteur (8) associé audit axe spécifié.
